# EUROPEAN PATENT APPLICATION

(11) **EP 2 481 947 A1**
(43) Date of publication of application: **01.08.2012**
(21) Application number: 10818683.4
(22) Date of filing: 07.09.2010
(51) Int. Cl.: F16F 9/34, F16F 9/32, F16F 9/342, F16F 9/50

(54) **DAMPER DEVICE**

(30) Priority: 25.09.2009 JP 2009220202
(71) Applicant: Nifco Inc., Yokohama-shi, Kanagawa 244-8522 (JP)
(72) Inventor: KOIZUMI, Kazuyoshi, Yokohama-shi Kanagawa 244-8522 (JP); HARADA, Akinori, Yokohama-shi Kanagawa 244-8522 (JP)
(74) Representative: Gassner, Wolfgang
(86) International application number: PCT/JP2010/065343
(87) International publication number: WO 2011/037007

(57) **Abstract**

A damper device includes a cylinder body and a piston body, and at least one of the cylinder body and the piston body is adapted to attach to an object to be damped for damping a movement or a relative movement of the object to be damped. A communication hole which communicates inside and outside of the cylinder body is formed in an inner back portion of the cylinder body. Also, a valve body is provided for reducing a flow volume of a fluid passing through the communication hole by moving from a standard position while elastically deforming at least one portion due to a pressure change caused by the movement or the relative movement of the piston body.

## Description

### FIELD OF TECHNOLOGY

The present invention relates to an improvement of a damper device which comprises a cylinder body and a piston body, and provides damping on a movement or a relative movement of an object to be damped by attaching at least one of either the cylinder body or the piston body to the object to be damped.

### BACKGROUND ART

As for the damper device comprising the cylinder body; the piston body; a plug-like body in which an axis portion is entered into a ventilation hole formed in an inner back portion of the cylinder body; and a spring urging the plug-like body, there is a damper device shown in Patent Document 1 disclosed by the present applicant. In this damper device, when the piston body moves in a direction of separating from the inner back portion of the cylinder body, an inside of the cylinder body becomes a negative pressure, so that due to the urging of the aforementioned spring, an amount in which the axis portion of the plug-like body is inserted into the ventilation hole increases. Thereby, an introduction of air into a cylinder through the ventilation hole is restricted, so that a damping force acts on the movement of the piston body to allow the damping force to act on the movement or the relative movement of the object to be damped.

### PRIOR ART DOCUMENT

### PATENT DOCUMENT

Patent Document 1: Japanese Unexamined Patent Publication No. 2008-275138

### SUMMARY OF THE INVENTION

### PROBLEMS TO BE SOLVED BY THE INVENTION

A main problem to be solved by the present invention is to provide a damper device comprising this kind of cylinder body and piston body with a structure which is further simplified and can be easily assembled.

### MEANS FOR SOLVING THE PROBLEMS

In order to achieve the aforementioned object, in the present invention, a damper device comprises a cylinder body and a piston body, and provides damping on a movement or a relative movement of an object to be damped by attaching at least one of either the cylinder body or the piston body to an object to be damped. In an inner back portion of the cylinder body, there is formed a communication hole which communicates inside and outside of the cylinder body. Also, the damper device comprises a valve body for reducing a flow volume of a fluid passing through the communication hole by moving from a standard position while elastically deforming at least one portion thereof due to a pressure change caused by the movement or the relative movement of the piston body.

When the piston body is moved or relatively moved in a direction of separating from the inner back portion of the cylinder body due to the movement or the relative movement of the object to be damped, a pressure chamber between the inner back portion and the piston body becomes a negative pressure, so that the valve body elastically deforms at least one portion thereof, and moves from the standard position. When the valve body moves in that manner, the flow volume of the fluid passing through the communication hole is reduced, and the fluid becomes difficult to be introduced into the pressure chamber from an outside, so that the damping acts on the movement or the relative movement of the piston body. Thereby, a damping force can act on the movement or the relative movement of the object to be damped. In accordance with a speed of the movement or the relative movement of the object to be damped, a moving amount of the valve body is increased and decreased, so that according to such damper device, the damping force in accordance with the speed of the movement or the relative movement of the object to be damped can act on such object to be damped. Specifically, such damper device is, i.e., a speed-response-type damper device. The valve body moves from the standard position due to the aforementioned elastic deformation. Therefore, due to an elastic return of the aforementioned one portion, the valve body is moved to return toward the standard position.

As for one preferable aspect, the damper device is constituted such that the inner back portion of the cylinder body is constituted by fitting a plug-like body into one end of a cylinder of a cylindrical main body, and also that the communication hole and the valve body are provided in the plug-like body.

Also, as for another preferable aspect, the damper device is constituted such that the valve body includes a metallic spring body comprising an axis portion which enters into the communication hole, and a latch-engaging portion relative to a latch-engaged portion formed on a cylinder body side.

Also, as for further another preferable aspect, the damper device is constituted such that the valve body comprises the axis portion which enters into the communication hole; the latch-engaging portion relative to the latch-engaged portion formed on the cylinder body side; and an elastic piece portion abutted against a receiving portion formed on the cylinder body side.

### EFFECT OF THE INVENTION

According to the present invention, the speed-response-type damper device can be appropriately constituted by three portions of the cylinder body, the piston body, and such valve body.

### BRIEF DESCRIPTION OF THE DRAWINGS

Fig. 1 is a perspective structural view of a plug-like body constituting a damper device according to the first example.
Fig. 2 is a perspective structural view of essential parts of the damper device according to the first example.
Fig. 3 is a cross-sectional structural view of the damper device according to the first example.
Fig. 4 is a perspective structural view of a valve body constituting the damper device according to a second example.
Fig. 5 is a perspective structural view of the essential parts of the damper device according to the second example.
Fig. 6 is a cross-sectional structural view of the damper device according to the second example.
Fig. 7 is a perspective structural view of the valve body constituting the damper device according to a third example.
Fig. 8 is a perspective structural view of the essential parts of the damper device according to the third example.
Fig. 9 is a cross-sectional structural view of the damper device according to the third example.

### EMBODIMENTS FOR CARRYING OUT THE INVENTION

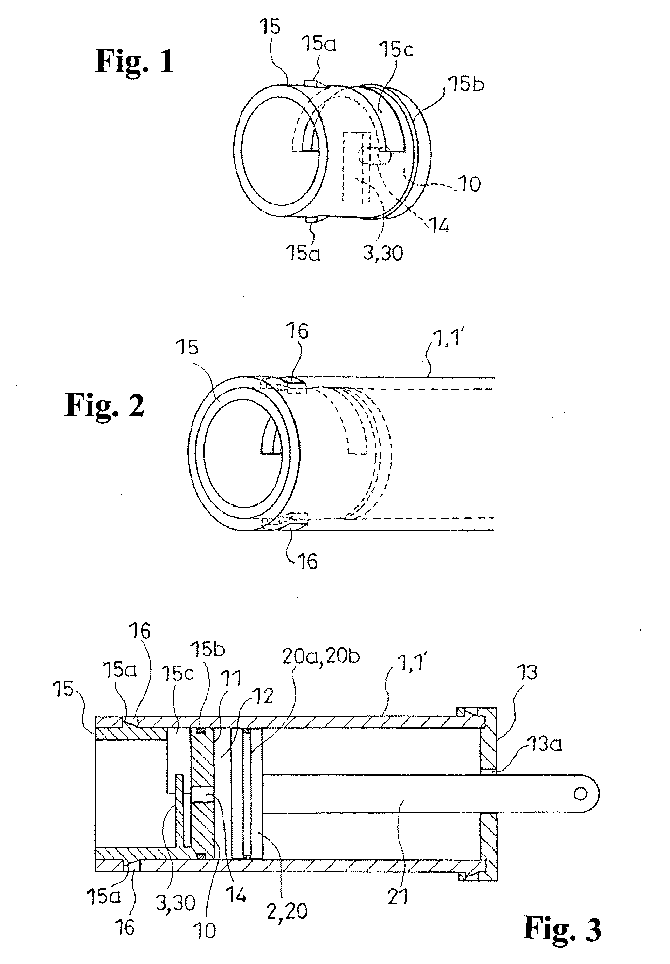

Hereinafter, typical embodiments of the present invention will be explained with reference to Figs. 1 to 9. A damper device according to the present embodiment comprises a cylinder body 1 and a piston body 2, and provides damping on a movement or a relative movement of an object to be damped by attaching at least one of either the cylinder body 1 or the piston body 2 to the object to be damped which is not shown in the figures.

For example, when a piston body 2 side is attached to the object to be damped as a movable body, and a cylinder body 1 side is attached to a stationary body which is not shown in the figures, due to the movement of the object to be damped, the piston body 2 is moved to be capable of providing the damping to the movement of the object to be damped through the piston body 2.

Also, when the piston body 2 side is attached to the object to be damped as the movable body, and the cylinder body 1 side is attached to the object to be damped as another movable body, due to the movement of two objects to be damped in a direction of mutually approaching, or in a direction of mutually separating, both the cylinder body 1 and the piston body 2 are moved so as to be capable of respectively providing the damping to the movement of the two objects to be damped.

In the cylinder body 1, the piston body 2 is housed movably in a direction along a center axis line of the cylinder body 1. In illustrated examples, the cylinder body 1 is constituted to form a cylindrical shape whose both ends of a cylinder are open. On one end side of the cylinder of the cylinder body 1, there is formed a partition wall 10, and a surface side of the partition wall 10 facing another end side of the cylinder body 1 becomes an inner back portion 11 of the cylinder body 1 as an inner side to make a pressure chamber 12 between the inner back portion 11 and the piston body 2.

In the illustrated examples, the piston body 2 includes a head 20 forming a short cylinder shape comprising an outer diameter approximately equal to an inner diameter of the cylinder body 1; and a rod 21 protruding toward an outside from another end of the cylinder of the cylinder body 1 by connecting one end to the head 20. The piston body 2 can be attached to the object to be damped and the like using the rod 21. On an outer peripheral portion of the head 20, there is formed a circling groove 20a, and a seal ring 20b is fitted into the outer peripheral portion of the head 20 using the circling groove 20a. An end cap 13 is fitted into another end of the cylinder of the cylinder body 1, and through a through-hole 13a formed in the center of the end cap 13, another end side of the rod 21 protrudes to the outside.

Also, in the inner back portion 11 of the cylinder body 1, there is formed a communication hole 14 communicating inside and outside of the cylinder body 1. At the same time, the damper device comprises a valve body 3 for reducing a flow volume of a fluid passing through the communication hole 14 by moving from a standard position while elastically deforming at least one portion thereof due to a pressure change caused by the movement or the relative movement of the piston body 2.

Due to the movement or the relative movement of the object to be damped, when the piston body 2 is moved or relatively moved in a direction of separating from the inner back portion 11 of the cylinder body 1, a pressure chamber 12 between the inner back portion 11 and the piston body 2 becomes a negative pressure, so that the valve body 3 elastically deforms at least one portion thereof, and moves from the standard position. When the valve body 3 moves in that manner, the flow volume of the fluid passing through the communication hole 14 is reduced, and the fluid becomes difficult to be introduced into the pressure chamber 12 from the outside, so that the damping acts on the movement or the relative movement of the piston body 2. Thereby, a damping force can act on the movement or the relative movement of the object to be damped. In accordance with a speed of the movement or the relative movement of the object to be damped, a moving amount of the valve body 3 is increased and decreased, so that according to such damper device, the damping force in accordance with the speed of the movement or the relative movement of the object to be damped can act on such object to be damped. Specifically, such damper device is, i.e., a speed-response-type damper device. The valve body 3 moves from the standard position due to the aforementioned elastic deformation. Therefore, due to an elastic return of the aforementioned one portion, the valve body is moved to return toward the standard position. Thereby, according to such damper device, the speed-response-type damper device can be appropriately constituted by three portions of the cylinder body 1, the piston body 2, and such valve body 3.

In the example shown in Figs. 1 to 3, the damper device is constituted such that the inner back portion 11 of the cylinder body 1 is constituted by fitting a plug-like body 15 into one end of the cylinder of a cylindrical main body 1', and also that the communication hole 14 and the valve body 3 are provided in the plug-like body 15. The plug-like body 15 is constituted to form the cylindrical shape whose one end of the cylinder is closed, and whose another end of the cylinder is open. In the illustrated example, the outer diameter of the plug-like body 15 is approximately equal to the inner diameter of the cylindrical main body 1' constituting the cylinder body 1. Then, in the example, such plug-like body 15 is fitted into the cylindrical main body 1' from one opened end of the cylinder of the cylindrical main body 1' by making one closed end side of the cylinder of the plug-like body 15 foremost, so that the partition wall 10 and also the inner back portion 11 are constituted by one closed end of the cylinder of such plug-like body 15. In the illustrated example, on external surface portions of side portions of such plug-like body 15, there are formed latch-engaging claws 15a, and in a predetermined inserted position into the cylindrical main body 1', the latch-engaging claws 15a recoil against latch-engaging holes 16, which are formed on one end side of the cylinder of the cylindrical main body 1', and enter into the latch-engaging holes 16 to be latched and engaged. The communication hole 14 is formed in an approximately center of the partition wall 10. On a side which becomes an outside of the pressure chamber 12 of the cylinder body 1, the valve body 3 is constituted as a plate-like elastic piece 30 whose one end is integrally connected to an inside portion of the plug-like body 15 and which extends toward the center of the partition wall 10, and also whose another end is positioned on the communication hole 14. In the standard position, the valve body 3 is approximately parallel to the partition wall 10, and there is formed a space between the valve body 3 and the partition wall 10. Due to the movement or the relative movement of the piston body 2, when the pressure chamber 12 becomes the negative pressure, the valve body 3 elastically deforms in a direction of approaching another end thereof to the communication hole 14, thereby reducing the flow volume of the fluid passing through the communication hole 14. In the drawings, the reference numeral 15b represents a seal ring between an external surface of the plug-like body 15 and an internal surface of the cylindrical main body 1', and the reference numeral 15c represents an opening for cutting a mold for molding the valve body 3 when the plug-like body 15 is injection-molded using a synthetic resin material. In the example shown in Figs. 1 to 3, such plug-like body 15 is combined with the cylindrical main body 1' to be capable of easily constituting the speed-response-type damper device comprising the cylinder body 1, the piston body 2, and the valve body 3.

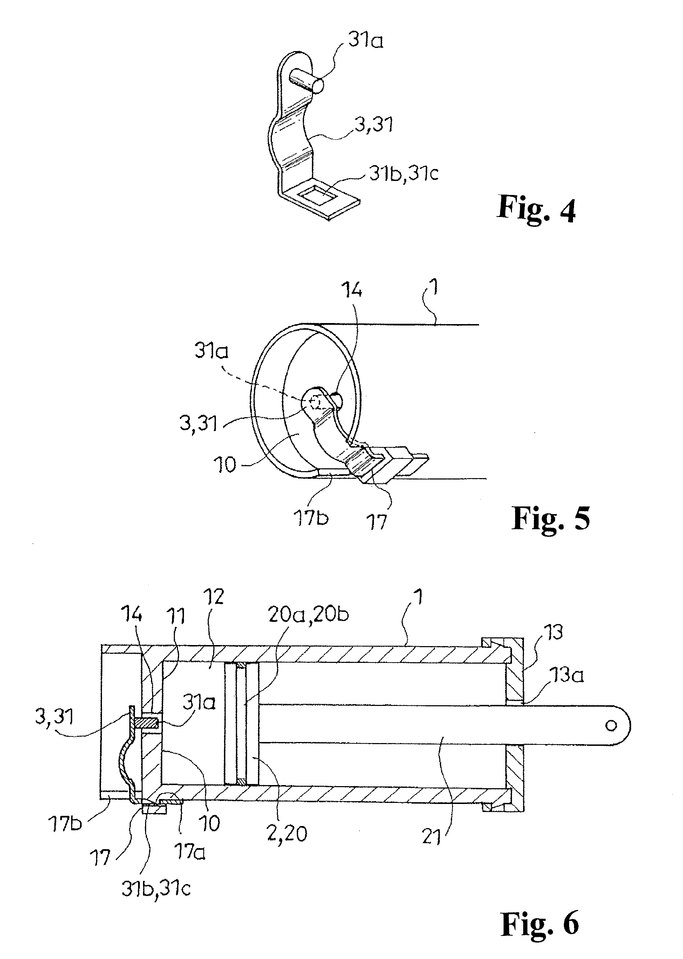

In an example shown in Figs. 4 to 6, the valve body 3 includes a metallic spring body 31 comprising an axis portion 31a which enters into the communication hole 14, and a latch-engaging portion 31b relative to a latch-engaged portion formed on the cylinder body 1 side to constitute the damper device. Such spring body 31 forms a band plate shape, and also is bent at an approximately right angle between both ends thereof. Between the bent position and one end of the spring body 31, there is formed a rectangular latch-engaging hole 31c which becomes the latch-engaging portion 31b. Also, on a surface which is another end of the spring body 31 and is positioned on the bent inner side, there is integrally connected one end of the axis portion 31a forming a pin shape and protruding in a direction perpendicular to the aforementioned surface. Also, between such axis portion 31a and the bent position, the spring body 31 is curved such that a protruding side of the axis portion 31a becomes a curved inner side. In the example, the partition wall 10 of the cylinder body 1 is formed in a position of opening a space between the partition wall 10 and one end of the cylinder of the cylinder body 1. Outside one end side of the cylinder of the cylinder body 1, there is formed an insert-through portion 17 wherein one end side of the spring body 31 can be inserted to pass through in the direction along the center axis line of the cylinder body 1. Also, inside the insert-through portion 17, a latch-engaging claw 17a is formed as the latch-engaged portion relative to the latch-engaging hole 31c. In the example, through a split notch portion 17b formed between one end of the cylinder of the cylinder body 1 and the partition wall 10, one end side of the spring body 31 is inserted to pass through the insert-through portion 17, and the latch-engaging claw 17a is latched and engaged with the latch-engaging hole 31c, so that in a state wherein another end side of the spring body 31 is disposed so as to be approximately parallel to an external surface of the partition wall 10, the spring body 31 is combined with the cylinder body 1. In the standard position, there is formed a space between the spring body 31 and the external surface of the partition wall 10. Also, the axis portion 31a is entered into the communication hole 14, which is provided in the approximately center of the partition wall 10, from the outside. A flow channel of the fluid is formed between the axis portion 31a and the communication hole 14. When the pressure chamber 12 becomes the negative pressure due to the movement or the relative movement of the piston body 2, the spring body 31 constituting the valve body 3 is elastically deformed in the direction of approaching the other end thereof to the partition wall 10, and an amount in which the axis portion 31a is inserted into the communication hole 14 increases. Thereby, at first, due to a resistance based on a viscosity of the fluid, the flow volume of the fluid passing through the communication hole 14 is reduced. Although it is omitted in the figures, if the axis portion 31a is constituted in such a way as to gradually thicken toward a base portion side thereof, or if a groove along an axis line direction thereof is formed in the axis portion 31a, and also the groove is constituted to gradually shallow toward the base portion side of the axis portion 31a, accompanied by an increase of an inserted amount of the axis portion 31a, a cross-sectional area of the flow channel of the fluid is further reduced, thereby reducing the flow volume of the fluid passing through the communication hole 14. In the example shown in Figs. 4 to 6, by combining such spring body 31 with the cylinder body 1, the speed-response-type damper device comprising the cylinder body 1, the piston body 2, and the valve body 3 can be easily constituted. Incidentally, the communication hole 14 may be provided in a position of slanting to an outer border side rather than the center of the partition wall 10.

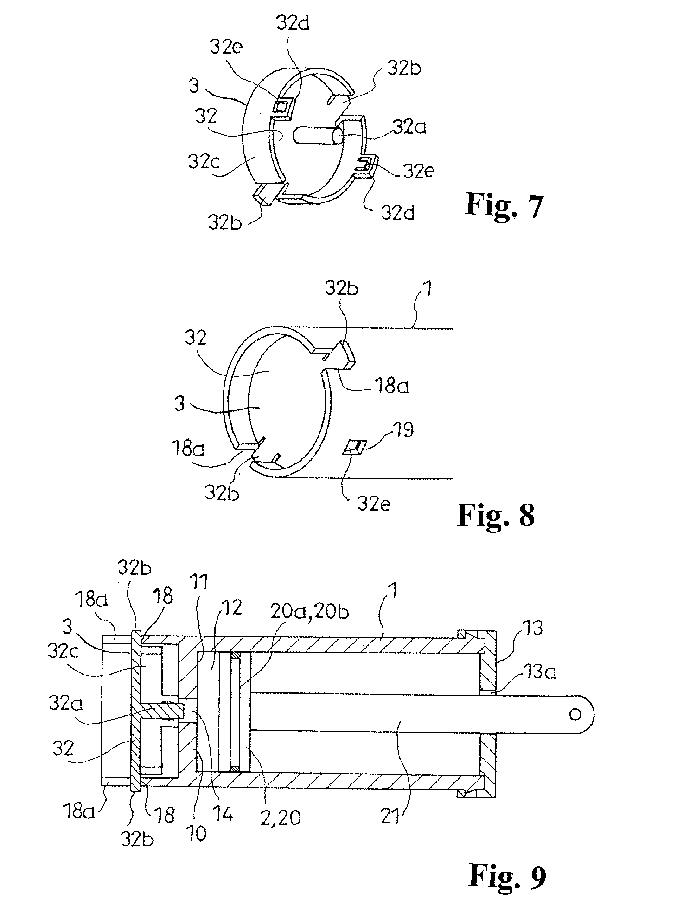

In an example shown in Figs. 7 to 9, the damper device is constituted such that the valve body 3 comprises an axis portion 32a which enters into the communication hole 14; the latch-engaging portion relative to the latch-engaged portion formed on the cylinder body 1 side; and elastic piece portions 32b abutted against receiving portions 18 formed on the cylinder body 1 side. In the example, the partition wall 10 of the cylinder body 1 is formed in the position of opening a space between the partition wall 10 and one end of the cylinder of the cylinder body 1. The valve body 3 integrally connects one end of the axis portion 32a forming the pin shape in the approximately center of one surface side of a discoid portion 32 which has a size approximately equal to the inner diameter of the cylindrical body 1. The axis portion 32a protrudes in a direction perpendicular to one surface of the discoid portion 32. On both sides in a diametrical direction of the discoid portion 32, there are respectively formed the elastic piece portions 32b protruding to the outside rather than an outer periphery of the discoid portion 32. On one end side of the cylinder body 1, there are respectively provided split notch portions 18a, which split and are notched from one end of the cylinder body 1 up to an approximately intermediate position between one end of the cylinder body 1 and the partition wall 10, on the both sides in the diametrical direction. In the illustrated example, the valve body 3 enters the elastic piece portions 32b into the split notch portions 18a, and the discoid portion 32 is housed inside the cylinder body 1 to abut against the elastic piece portions 32b as the receiving portions 18 as the inner back portion 11. In a state wherein the elastic piece portions 32b are not deformed, a space is formed between one surface of the discoid portion 32 and the external surface of the partition wall 10, and both surfaces are approximately parallel. Also, in the example, along a border portion of the discoid portion 32, a peripheral wall 32c surrounding one surface side of the discoid portion 32 is formed between a pair of the elastic piece portions 32b and 32b. In a position different from a position in which the elastic piece portions 32b are provided, there are formed latch-engaging portions in ends of protruding ends of the peripheral wall. In the illustrated example, such latch-engaging portions are formed by latch-engaging claws 32e protruding to the outside in tongue pieces 32d which protrude forward from the peripheral wall. On one end side of the cylinder body 1, and outside the partition wall 10, there are formed window holes 19 as latch-engaged portions wherein the latch-engaging claws 32e constituting such latch-engaging portions are recoiled, latched and engaged accompanied by housing and entering the discoid portion 32 from one end side of the cylinder body 1. An opening size of the window holes 19 in the direction along the center axis line of the cylinder body 1 is larger than a size in the aforementioned direction of the latch-engaging claws 32e, and although the latch-engaging portions are latched and engaged with the latch-engaged portions, the window holes 19 have the opening size which allows a movement of the discoid portion 32 in a direction along the center axis line of the cylinder body 1 from the aforementioned latched and engaged state. In the standard position, one surface of the discoid portion 32 of the valve body 3 is approximately parallel to the external surface of the partition wall 10. Also, the axis portion 32a is entered into the communication hole 14 provided in the center of the partition wall 10 from the outside. A flow channel of the fluid is formed between the axis portion 32a and the communication hole 14. When the pressure chamber 12 becomes the negative pressure due to the movement or the relative movement of the piston body 2, the elastic piece portions 32b constituting the valve body 3 are elastically deformed in the direction of approaching the discoid portion 32 to the partition wall 10, and an amount in which the axis portion 32a is inserted into the communication hole 14 increases. Thereby, at first, due to the resistance based on the viscosity of the fluid, the flow volume of the fluid passing through the communication hole 14 is reduced. Although it is omitted in the figures, if the axis portion 32a is constituted to gradually thicken toward the base portion side thereof, or if the groove along the axis line direction thereof is formed in the axis portion 32a, and also the groove is constituted to gradually shallow toward the base portion side of the axis portion 32a, accompanied by the increase of the inserted amount of the axis portion 32a, the cross-sectional area of the flow channel of the fluid is further reduced, thereby reducing the flow volume of the fluid passing through the communication hole 14. In the example shown in Figs. 7 to 9, by combining the valve body 3 comprising such elastic piece portions 32b with the cylinder body 1, the speed-response-type damper device comprising the cylinder body 1, the piston body 2, and the valve body 3 can be easily constituted.

In the examples explained above, although the fluid is air (gas), even in a case where the fluid is a liquid, the examples explained above function in the same manner. For example, in a case where the object to be damped is used by being soaked in the liquid, or in a case where the cylinder body 1 is further housed in an external case, which is not shown in the figures, and the inside of the external case is filled with the liquid, the damping can be provided on the object to be damped by using the aforementioned liquid.
All contents of the specification, claims, drawings, and abstract of Japanese Patent Application No. 2009-220202 filed on September 25, 2009 are cited in their entireties herein and are incorporated as a disclosure of the specification of the present invention.

## Claims

1. A damper device, comprising:
a cylinder body;
a piston body wherein at least one of the cylinder body and the piston body is adapted to attach to an object to be damped to provide damping on a movement or a relative movement of the object to be damped,
a communication hole formed in an inner back portion of the cylinder body, which communicates inside and outside of the cylinder body; and
a valve body for reducing a flow volume of a fluid passing through the communication hole by moving from a standard position while elastically deforming at least one portion thereof due to a pressure change caused by the movement or the relative movement of the piston body.

2. A damper device according to claim 1, wherein the inner back portion of the cylinder body comprises a plug body fitted into one cylinder end of a cylindrical main body, and wherein the plug body comprises the communication hole and the valve body.

3. A damper device according to claim 1, wherein the valve body comprises a metallic spring body having an axis portion which enters into the communication hole, and a latch-engaging portion relative to a latch-engaged portion formed on a cylinder body side.

4. A damper device according to claim 1, wherein the valve body comprises an axis portion entering into the communication hole; latch-engaging portions relative to latch-engaged portions formed on a cylinder body side; and elastic piece portions abutting against receiving portions formed on the cylinder body side.
